# EUROPEAN PATENT APPLICATION

(11) **EP 4 842 142 A1**
(43) Date of publication of application: **18.11.2026**
(21) Application number: 25176588.9
(22) Date of filing: 15.05.2025
(51) Int. Cl.: H05B 47/115, H05B 47/19

(54) **METHODS AND ARRANGEMENTS FOR ADAPTING LIGHTING TO USER ACTIVITY**

(71) Applicant: Helvar Oy Ab, 02150 Espoo (FI)
(72) Inventor: Juslén, Henri, 02150 Espoo (FI); Hattab, Adel, 02150 Espoo (FI); Niittymäki, Pasi, 02150 Espoo (FI)
(74) Representative: Papula Oy

(57) **Abstract**

A method for controlling lighting at a workstation comprises monitoring (402) continued occupancy at the workstation while maintaining lighting at the workstation at a level determined to enable working at the workstation and, in response to the continued occupancy exceeding a predetermined duration without detected interruption, increasing lighting (403) at the workstation.

## Description

### FIELD OF THE INVENTION

The invention is related to the field of adaptive building automation systems. In particular, the invention is related to making an adaptive lighting system serve the needs of users in an optimal way.

### BACKGROUND

Artificial lighting is a major contributor to the well-being of users indoors. The amount and quality of light affect the alertness of users, as well as their ability to perform tasks that require accuracy and concentration. The human brain works according to a circa-than rhythm that regulates cycles of alertness and sleepiness, but this rhythm can be affected and its natural effects either deliberately amplified or attenuated by subjecting the person to artificially generated light of appropriate intensity and/or colour temperature. In indoor working environments where the work itself does not involve much physical activity, like in office work for example, important effects on productivity and subjective well-being can be achieved by controlling the lighting properly.

Known solutions for lighting control in such a framework include, for example, using daylight harvesting (so that artificial lighting is used to augment the measured amount of natural light) and changing the colour temperature of lighting according to a predefined profile during the day. A known European standard EN12464-1 defines basic terms and definitions on this field and sets out a framework for the specification of lighting requirements, giving details of aspects that are to be considered when setting those requirements.

### SUMMARY

It is an objective to present a method and apparatus that have a positive effect of the well-being of users in an environment served by a building automation system. In particular, an objective is to provide such an improvement in a way that only requires reasonable investment in equipment and software, in addition to what building automation systems already include and are programmed to do.

These and other advantageous objectives are met by monitoring continuous occupancy at one or more workstations and using controlled lighting to increase illumination in response to detected long periods of continuous occupation.

According to a first aspect, there is provided a method for controlling lighting at a workstation. The method comprises monitoring continued occupancy at the workstation while maintaining lighting at the workstation at a level determined to enable working at the workstation and, in response to the continued occupancy exceeding a predetermined duration without detected interruption, increasing lighting at the workstation.

According to an embodiment, the monitoring of the continued occupancy comprises evaluating sensor signals generated by a sensor subsystem. This involves at least the advantage of enabling the use of relatively well focused and accurate means for detecting occupancy.

According to an embodiment, the evaluating of the sensor signals comprises evaluating signals generated by at least one of: passive infrared sensor, radar, lidar, pressure sensor, microphone, camera, thermal imager, gas sensor. This involves at least the advantage that well-known sensor technology can be used, with good understanding of its capabilities.

According to an embodiment, the monitoring of the continued occupancy comprises evaluating wireless transmissions received over a short distance radio link. This involves at least the advantage that the monitoring may become possible with only minimal additional hardware.

According to an embodiment, the method comprises evaluating said wireless transmissions to find out whether any of them originated from a wearable personal activity monitor device. In response to detecting a wireless transmission from a wearable personal activity monitor device and indicative of a command to a user to move, the method may then comprise executing said increasing of lighting at the workstation. This involves at least the advantage that there can be assumed to be a very reliable deterministic relationship between the detected wireless transmissions and the actual state of physical activity of the user.

According to an embodiment, the method comprises evaluating said wireless transmissions to find out whether any of them originated from an electronic device operable by a user at the workstation. In response to repeatedly detecting, throughout said predetermined duration, wireless transmissions indicative of the user operating one or more electronic devices at the workstation, the method may then comprise executing said increasing of lighting at the workstation. This involves at least the advantage that the monitoring may become possible with only minimal additional hardware.

According to an embodiment, the method comprises defining said predetermined duration on basis of previously detected occupancy at the workstation. This involves at least the advantage that measures aimed at improving the awareness of the user can be focused on exceptionally long passes of the user being stationary at the workstation.

According to an embodiment, the method comprises, in response to not detecting occupancy at the workstation, maintaining lighting at the workstation at another level, lower than said level determined to enable working at the workstation. This involves at least the advantage of saving energy.

According to a second aspect, there is provided an apparatus for controlling lighting at a workstation. The apparatus comprises a processing engine configured to monitor continued occupancy at the workstation while maintaining lighting at the workstation at a level determined to enable working at the workstation and, in response to the continued occupancy exceeding a predetermined duration without detected interruption, increase lighting at the workstation.

According to an embodiment, the apparatus comprises at least one sensor configured to serve the processing engine with sensor signals indicative of detected occupancy at the workstation. This involves at least the advantage of enabling the use of relatively well focused and accurate means for detecting occupancy.

According to an embodiment, the apparatus comprises a communications transceiver configured to serve the processing engine with reception signals indicative of wireless transmissions received over a short distance radio link. This involves at least the advantage that the monitoring may become possible with only minimal additional hardware.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** illustrates a user at a workstation,
**figure 2** illustrates an apparatus for controlling lighting at a workstation,
**figure 3** illustrates another apparatus for controlling lighting at one or more workstations, and
**figure 4** illustrates a method.

### DETAILED DESCRIPTION

In the following description, reference is made to the accompanying drawings, which form part of the disclosure, and in which are shown, by way of illustration, specific aspects in which the present disclosure may be placed. It is understood that other aspects may be utilised, and structural or logical changes may be made without departing from the scope of the present disclosure. The following detailed description, therefore, is not to be taken in a limiting sense, as the scope of the present disclosure is defined be the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. On the other hand, for example, if a specific apparatus is described based on functional units, a corresponding method may include a step performing the described functionality, even if such step is not explicitly described or illustrated in the figures. Further, it is understood that the features of the various example aspects described herein may be combined with each other, unless specifically noted otherwise.

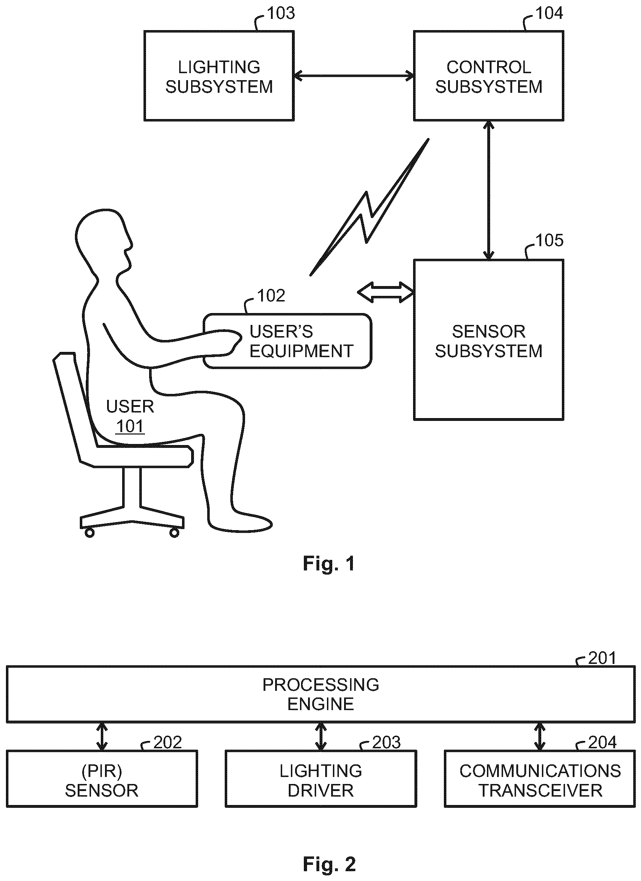

Fig. 1 illustrates schematically a workstation where a user 101 spends time operating one or more pieces of user's equipment 102. Taken present-day office work as an example, the user's equipment 102 typically comprises a computer such as a tabletop or laptop computer, tablet computer, or at least some input device(s) like a keyboard, mouse, and/or touchscreen as well as some output device(s) like a display. Conceptually, the user's equipment 102 shown in fig. 1 may also comprise devices carried along by the user 101, such as a smartphone, a smart watch, a wearable personal activity monitor device, and/or sensors embedded in clothing or other carry-on items.

The workstation is assumed to be located within an environment served by a building automation system. Functionalities of the building automation system may include, without limitation, for example lighting, heating, ventilation, access control, and detection of hazardous conditions such as smoke. In fig. 1, a part of the building automation system is a lighting subsystem 103. A control subsystem 104 and a sensor subsystem 105 are shown in fig. 1 as conceptionally different from the lighting subsystem 103. Depending on aspects of implementation, all three may also be functionalities of a common, integrated system.

The sensor subsystem 105 may comprise any or all of a variety of sensor types. Examples of sensor types include, but are not limited to, passive infrared (PIR) sensors, radars, lidars, pressure sensors, microphones, cameras, and thermal imagers. The lighting subsystem 103 may comprise one or more controllable luminaires. The control subsystem 104 may comprise, for example, one or more controlling servers with wired and/or wireless connections to the other subsystems. Interactions between the user's equipment 102 and the control subsystem 104 are possible, schematically represented in fig. 1 with the lightning symbol. Such interactions may be intentional and meaningful for the operation of the building automation system, or they may be accidental, without being meant as intentional interactions. As an example of intentional and meaningful interactions, the control subsystem 104 may be capable of detecting wireless transmissions that convey commands given by the user, such as commands to increase or decrease lighting or to operate window shades nearby. As an example of accidental interactions, the control subsystem 104 may detect wireless transmissions that were originally meant only to convey information between devices belonging to the user's equipment 102.

Fig. 2 illustrates an example of a small-scale building automation system that may, in its simplest form, include only a single apparatus such as an intelligent luminaire. The apparatus in fig. 2 comprises a processing engine 201, which may comprise one or more processors or microcontrollers arranged to execute routines in accordance with stored program code. At least one sensor 202, such as a PIR sensor for example, may be configured to serve the processing engine 201 with sensor signals. The sensor signals meant here are indicative of user occupancy at one or more workstations. An actuator part, such as a lighting driver 203, may operate under the control of the processing engine to provide services to the user, for example in the form of appropriately controlled lighting. Also shown in fig. 2 is a communications transceiver 204 configured to at least serve the processing engine 201 with information over a communications link, such as a wired or wireless communications link.

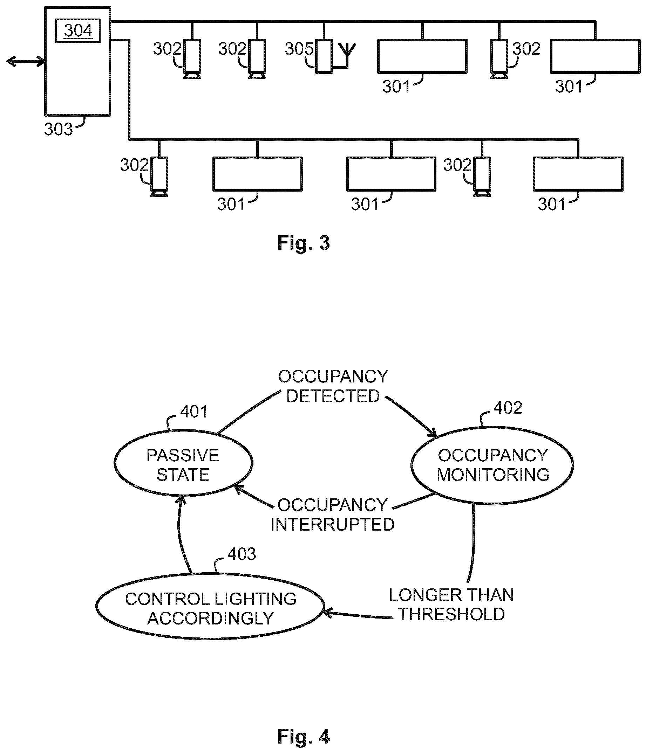

Fig. 3 illustrates an example of a distributed building automation system in which a plurality of node devices 301 and a plurality of sensors 302 are connected to a central controller 303 through wired communication connections. As a part of the central controller 303 is a processing engine configured to receive sensor signals from the sensors 302 and to command the node devices 301 through the wired communication connections. The sensors 302 are capable of producing sensor signals indicative of user occupancy at one or more workstations. The system may also comprise local communications receivers or transceivers 305 that may serve a similar purpose as the sensors 302, serving the processing engine 304 with reception signals indicative of wireless transmissions received over a short distance radio link and, hence, of occupancy of one or more workstations.

The way in which sensor signals may indicate occupancy at one or more workstations depends on the kinds of sensors used. As a first example, a PIR sensor is essentially a passive receiver of infrared radiation emitted by objects in its field of view. A human user is a characteristically warmer object than the floor, walls, furniture, and other inanimate objects typically found at a workstation, so basically it is possible to use a PIR detector to detect whether a user is occupying a workstation or not. Practical PIR sensors may be only capable of detecting movement of IR-emitting objects within their field of view. However, as a human user typically moves slightly every now and then even when sitting or standing at a workstation, it may be possible to use a suitably directed and/or pixelized PIR sensor to monitor occupancy at a workstation.

With a more sophisticated optical sensor such as a camera or thermal imager it is even more straightforward to detect a user and monitor their occupancy at a workstation. A rather coarse optical resolution may be enough to make reasonably reliable conclusions about whether or not there is a human user in the field of view of such a sensor.

A radar or lidar is, when used for this kind of purposes, basically a distance sensor that measures the distance between the transceiver unit and the closest object within its field of view. A radar or lidar directed towards the location that a user will most probably occupy while working at a workstation may give rather straightforward indications of whether the position of the user at the workstation is empty or occupied.

Pressure sensors may be installed in fixed structures like a floor below a workstation, in furniture like a chair or table, and/or in accessories like a carpet on the floor or a table mat under a keyboard. When the workstation is not occupied, a pressure sensor will output signals within a first range. When the workstation is occupied, the pressure sensor will output signals within a second range, indicating more pressure and/or fluctuation of pressure caused by the user slightly moving at the workstation.

A microphone may be used to detect that there are more sounds like speech, humming, breathing, tapping a keyboard, swishing of fabric, or the like when the workstation is occupied. Similar to imaging sensors like cameras, local legislation must be carefully observed if the use of microphones could be interpreted as an infringement of privacy.

A gas sensor can detect changes in the gas atmosphere at or immediately surrounding a workstation when a user is present. Examples of gases, increased content of which in air indicated the presence of human users and/or animals, include carbon dioxide and various volatile organic compounds.

By placing one or more sensors in a suitable manner, the reliability of detecting user occupancy based on sensor signals can be improved. As a non-limiting example, a sensor placed under the table at a workstation probably has a rather limited field of view within which any activity is only detected when a user is actually present, sitting or standing so that the sensor can detect the legs of the user.

The reliability of detecting user occupancy based on sensor signals can also be improved by combining sensor findings by different sensors. Simultaneous or nearly simultaneous findings by two or more sensors, using the same or different sensor technology, may indicate the presence of a human user more reliably than sensor findings by only a single sensor.

Additionally, or alternatively, occupancy at a workstation may be detected by evaluating wireless transmissions receive over a short distance radio link. Most users carry constantly along one or more devices that make such transmissions. Most common are smartphones, but there are also other examples including, but not limited to wireless headphones, smart watches, wearable activity monitors, and the like. Evaluating wireless transmissions may mean simply detecting a power level of nearby wireless transmissions, without having to properly receive them in the sense that it would be possible to find out any of their information content. It is, however, also possible to very accurately detect not only occupancy by but even a level of activity of a user if it is possible to detect, for example, wireless transmissions originating from a wearable personal activity monitor indicative of a command to the user to move, in order to be invigorated. As another example, the evaluating of wireless transmissions may be to find out whether any of them originated from an electronic device operable by a user at the workstation, such as a wireless mouse, wireless keyboard, smartphone, or the like. Repeatedly detecting, throughout a predetermined duration, wireless transmissions indicative of the user operating one or more electronic devices at the workstation may serve as an indication of continued occupancy at the workstation.

It is possible to use a previously programmed, externally configured, or otherwise fixed length of time as the predetermined duration after which the lighting is increased at the workstation if uninterrupted occupancy seems to continue. Another possibility is to make the predetermined duration adaptive, so that while it can be said to be predetermined, the process of determining its length may run continuously or repeatedly and, hence, predetermine its length separately even for each occasion. As an example, it is possible to detect and store a usual or average duration of continued occupancy at the workstation. This can be, say, two hours and ten minutes. If then continued occupancy is detected to continue for more than two hours and ten minutes, the increasing of lighting can be initiated.

Fig. 4 illustrates a method for controlling lighting at a workstation. The passive state 401 is assumed to prevail whenever the workstation is deemed to be not occupied at all. Detecting occupancy leads to a state of monitoring continued occupancy at the workstation, marked with reference designator 402, while maintaining lighting at the workstation at a level determined to enable working at the workstation. If there is an interruption in the detected occupancy, i.e. if the user goes away, a return to the passive state 401 occurs. However, in response to the continued occupancy exceeding a predetermined threshold duration without detected interruption, the method comprises increasing lighting 403 at the workstation. The idea is that while a user may lose some of their vigour if working continuously at the workstation without breaks, increasing lighting may improve their wellbeing, compensating for some of the incipient exhaustion.

It is possible, but not mandatory, to utilize the passive state 401 to save energy so that in the passive state 401, lighting at the workstation is dimmed to a low level or even switched off completely. Lighting is, after all, hardly needed if there is nobody at the workstation. In such a case, detecting occupancy could lead to initially increasing the lighting to a basic level, which may be a standard-compliant level of sufficient lighting at a workstation or a level otherwise determined to enable working at the workstation. In a more elaborate embodiment, such increasing of the lighting to the basic level could take place only after a delay, so that the level of lighting is not increased in vain if the user was just briefly visiting the workstation, like just bringing their stuff without staying there to actually perform any work. Similarly, if the above-described energy-saving practice is obeyed, dimming the lighting to the no-detected-use level or switching lighting off may take place after a delay, so that brief interruptions in detected occupancy do not cause possibly irritating fluctuations in observed level of lighting.

In fig. 4, after controlling the lighting at state 403, the method returns to the passive state 401. Alternatively, it could return to the state 402 of monitoring continued occupancy. Namely, if after a return to the passive state 401 the detected occupancy at the workstation just continues, it just causes another immediate transition to state 402. Conversely, if the method returns to state 402 but then the detected occupancy does not continue any more, a further transition to the passive state 401 occurs.

As already indicated above, the monitoring of the continued occupancy at state 302 may comprise evaluating sensor signals generated by a sensor subsystem, and/or evaluating wireless transmissions received over a short distance radio link.

Any act of increasing lighting at step 403 can be executed in many ways. Typically, users dislike abrupt changes in lighting even if the effect of an abrupt change could be more invigorating than that of a gradual change. A gradual change may have an invigorating effect which, in an advantageous case, could go even unnoticed by the consciousness of the user so that the user just feels better, without having to think why. The method explained here may include aspects of machine learning, for example so that if the lighting is increased by a first amount but very soon thereafter the user is observed to utilize a light control to dim down the lighting, in the next corresponding situation the increase in the lighting will be made more gradually and/or by a second, smaller amount because the first amount obviously did not please the user.

What is said above about lighting could be generalized to other services that a building automation system can offer to users. For example, if temperature at a workstation can be controllably changed between an optimal level for working and another, more invigorating level, the optimal level can be maintained if continued occupancy at the workstation does not continue for more than the predetermined duration. After that, the more invigorating temperature level can be introduced. Further, if there is another, more energy-efficient temperature level that is not, however, optimal for working, such a level can be employed during a passive state following the same practices as those explained above with reference to dimming down or switching off the workstation-specific lighting.

## Claims

1. A method for controlling lighting at a workstation, comprising:
- monitoring (402) continued occupancy at the workstation while maintaining lighting at the workstation at a level determined to enable working at the workstation, and
- in response to the continued occupancy exceeding a predetermined duration without detected interruption, increasing lighting (403) at the workstation.

2. A method according to claim 1, wherein the monitoring (402) of the continued occupancy comprises evaluating sensor signals generated by a sensor subsystem (105, 202).

3. A method according to claim 2, wherein the evaluating of the sensor signals comprises evaluating signals generated by at least one of: passive infrared sensor, radar, lidar, pressure sensor, microphone, camera, thermal imager, gas sensor.

4. A method according to any of the preceding claims, wherein the monitoring (402) of the continued occupancy comprises evaluating wireless transmissions received over a short distance radio link.

5. A method according to claim 4, comprising:
- evaluating said wireless transmissions to find out whether any of them originated from a wearable personal activity monitor device (102), and
- in response to detecting a wireless transmission from a wearable personal activity monitor device (102) and indicative of a command to a user (101) to move, executing said increasing of lighting at the workstation.

6. A method according to any of claims 4 or 5, comprising:
- evaluating said wireless transmissions to find out whether any of them originated from an electronic device (102) operable by a user (101) at the workstation, and
- in response to repeatedly detecting, throughout said predetermined duration, wireless transmissions indicative of the user (101) operating one or more electronic devices (102) at the workstation, executing said increasing of lighting at the workstation.

7. A method according to any of the preceding claims, comprising:
- defining said predetermined duration on basis of previously detected occupancy at the workstation.

8. A method according to any of the preceding claims, comprising:
- in response to not detecting occupancy at the workstation, maintaining lighting at the workstation at another level, lower than said level determined to enable working at the workstation.

9. An apparatus for controlling lighting at a workstation, the apparatus comprising a processing engine (201, 304) configured to:
- monitor (402) continued occupancy at the workstation while maintaining lighting at the workstation at a level determined to enable working at the workstation, and
- in response to the continued occupancy exceeding a predetermined duration without detected interruption, increase lighting (403) at the workstation.

10. An apparatus according to claim 9, comprising at least one sensor (202, 302) configured to serve the processing engine (201, 304) with sensor signals indicative of detected occupancy at the workstation.

11. An apparatus according to any of claims 9 or 10, comprising a communications transceiver (204, 305) configured to serve the processing engine (201, 304) with reception signals indicative of wireless transmissions received over a short distance radio link.
